# EUROPEAN PATENT APPLICATION

(11) **EP 4 800 935 A1**
(43) Date of publication of application: **02.09.2026**
(21) Application number: 23956502.1
(22) Date of filing: 27.10.2023
(51) Int. Cl.: H04B 7/0456

(54) **COMMUNICATION METHOD AND COMMUNICATION APPARATUS**

(71) Applicant: HUAWEI TECHNOLOGIES CO., LTD., Shenzhen 518129 (CN)
(72) Inventor: WANG, Lei, Shenzhen, Guangdong 518129 (CN); BI, Xiaoyan, Shenzhen, Guangdong 518129 (CN); JIANG, Yisheng, Shenzhen, Guangdong 518129 (CN)
(74) Representative: Isarpatent
(86) International application number: PCT/CN2023/127185
(87) International publication number: WO 2025/086259

(57) **Abstract**

This application provides a communication method and a communication apparatus. In the method, a second apparatus may send first indication information indicating N anchors, to indicate N pieces of anchor information to a first apparatus. For example, the N pieces of anchor information include all or a part of uplink precoding information. The second apparatus may further send incremental information associated with the N anchors. For example, the incremental information associated with the N anchors is an increment of anchor information, or the other part of precoding generation information. This helps reduce indication overheads of the uplink precoding information.

## Description

### TECHNICAL FIELD

This application relates to the field of communication technologies, and in particular, to a communication method and a communication apparatus.

### BACKGROUND

In a next-generation mobile communication system, as a quantity of antennas of a network device increases, the network device may be connected to more terminals. Therefore, in an uplink transmission scenario, a high-precision uplink codebook needs to be considered, and consequently, indication overheads of uplink precoding sharply increase. In addition, as a quantity of antennas of a terminal increases, the terminal may use more space division multiplexing streams; and as a bandwidth increases, a sub-band (sub-band) codebook is also considered in an uplink. Consequently, indication overheads of uplink precoding further increase. Therefore, how to reduce indication overheads of uplink precoding becomes a problem to be resolved.

### SUMMARY

This application provides a communication method and a communication apparatus. The communication method helps reduce indication overheads of uplink precoding, and also helps reduce precoding calculation complexity.

According to a first aspect, this application provides a communication method. The method is performed by a first apparatus. The first apparatus may be a communication device, or may be a part (for example, a processor, a chip, or a chip system) in a communication device, or may be a logical module that can implement all or a part of communication functions. For example, the first apparatus may be a terminal. The first apparatus receives first indication information, where the first indication information indicates N anchors, the N anchors are associated with N pieces of anchor information, and N is a positive integer. The first apparatus receives second indication information, where the second indication information indicates incremental information associated with the N anchors, and the N pieces of anchor information and the incremental information are associated with uplink precoding information.

In the method, the first apparatus may first receive the first indication information indicating the N anchors, to obtain the N pieces of anchor information. For example, the N pieces of anchor information include all or a part of the uplink precoding information. The first apparatus may further receive the incremental information associated with the N anchors. The incremental information associated with the anchor is an increment of anchor information, or the other part of precoding generation information. This helps reduce indication overheads of the uplink precoding information. Specifically, the incremental information may mean that a value in the information may be changed (may be increased or decreased) based on an original value, or may mean that a value type or a parameter type in the information is added. For example, a first matrix related to precoding is configured in the anchor information, and a second matrix related to precoding is additionally configured in the incremental information.

In a possible implementation, the first apparatus performs uplink precoding based on the N pieces of anchor information and the incremental information, to obtain and send an uplink signal.

In the method, the first apparatus may perform uplink precoding based on the obtained N pieces of anchor information and the subsequently obtained incremental information associated with the N anchors, and only a part of the uplink precoding information needs to be updated. This helps reduce coding calculation complexity.

In a possible implementation, the first apparatus receives third indication information, where the third indication information indicates M pieces of anchor information of M anchors, the anchor is at least one of a geographic anchor, a channel anchor, and a time domain anchor, M is a positive integer greater than or equal to N, and the N anchors belong to the M anchors.

In the method, before receiving the first indication information, the first apparatus may further receive the third indication information. The third indication information is used to configure the M pieces of anchor information of the M anchors. For example, the first apparatus may preconfigure the M pieces of anchor information based on the third indication information. Subsequently, only the N anchors need to be indicated to the first apparatus, and the first apparatus can then determine to use the N pieces of anchor information associated with the N anchors. This helps reduce indication overheads of the uplink precoding information.

In a possible implementation, when the anchor is a geographic anchor, anchor information of the geographic anchor includes one piece or a combination of a plurality of pieces of information such as geographic location information, channel state information, and precoding information; or when the anchor is a channel anchor, anchor information of the channel anchor includes one piece or a combination of a plurality of pieces of information such as channel state information and precoding information obtained based on the channel state information; or when the anchor is a time domain anchor, anchor information of the time domain anchor includes one piece or a combination of a plurality of pieces of information such as time domain information, channel state information, and precoding information.

In a possible implementation, the geographic anchor represents a geographic location, the channel anchor represents a preset channel state, and the time domain anchor represents a time domain position.

In the foregoing method, a plurality of different types of anchors (for example, a geographic anchor, a channel anchor, or a time domain anchor) are defined. The first apparatus only needs to receive anchor-based dynamic information, to determine the uplink precoding information. This helps reduce indication overheads of the uplink precoding information.

In a possible implementation, the second indication information includes at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

In the method, a correspondence between content of the second indication information and a type of the anchor is defined. For example, when the N anchors are geographic anchors, the second indication information includes incremental information of geographic locations corresponding to the N anchors (for example, incremental information of beam information of a channel corresponding to a geographic location of the anchor).

In a possible implementation, the first apparatus sends fourth indication information, where the fourth indication information indicates P anchors, and the N anchors are partially or completely the same as the P anchors.

In the method, the first apparatus may perform anchor selection, and report the selected P anchors to a second apparatus, so that the second apparatus performs selection from the P anchors.

According to a second aspect, this application provides a communication method. The method is performed by a second apparatus. The second apparatus may be a communication device, or may be a part (for example, a processor, a chip, or a chip system) in a communication device, or may be a logical module that can implement all or a part of functions of a communication device. For example, the second apparatus may be a network device (for example, a base station). The second apparatus sends first indication information, where the first indication information indicates N anchors, the N anchors are associated with N pieces of anchor information, and N is a positive integer. The second apparatus sends second indication information, where the second indication information indicates incremental information associated with the N anchors, and the N pieces of anchor information and the incremental information are associated with uplink precoding information.

In the method, the second apparatus may first send the first indication information indicating the N anchors, to indicate the N pieces of anchor information to a first apparatus. For example, the N pieces of anchor information include all or a part of the uplink precoding information. The second apparatus may further send the incremental information associated with the N anchors. The incremental information associated with the anchor is an increment of anchor information, or the other part of precoding generation information. This helps reduce indication overheads of the uplink precoding information. Specifically, the incremental information may mean that a value in the information may be changed (may be increased or decreased) based on an original value, or may mean that a value type or a parameter type in the information is added. For example, a first matrix related to precoding is configured in the anchor information, and a second matrix related to precoding is additionally configured in the incremental information.

In a possible implementation, the second apparatus sends third indication information, where the third indication information indicates M pieces of anchor information of M anchors, the anchor is at least one of a geographic anchor, a channel anchor, and a time domain anchor, M is a positive integer greater than or equal to N, and the N anchors belong to the M anchors.

In the method, before sending the first indication information, the second apparatus may further send the third indication information. The third indication information is used for indicating the M pieces of anchor information of the M anchors to the first apparatus. Subsequently, the second apparatus only needs to indicate the N anchors to the first apparatus, and the first apparatus can then determine to use the N pieces of anchor information associated with the N anchors. This helps reduce indication overheads of the uplink precoding information.

In a possible implementation, when the anchor is a geographic anchor, anchor information of the geographic anchor includes one piece or a combination of a plurality of pieces of information such as geographic location information, channel state information, and precoding information; or when the anchor is a channel anchor, anchor information of the channel anchor includes one piece or a combination of a plurality of pieces of information such as channel state information and precoding information obtained based on the channel state information; or when the anchor is a time domain anchor, anchor information of the time domain anchor includes one piece or a combination of a plurality of pieces of information such as time domain information, channel state information, and precoding information.

In a possible implementation, the geographic anchor represents a geographic location, the channel anchor represents a preset channel state, and the time domain anchor represents a time domain position.

In the foregoing method, a plurality of different types of anchors (for example, a geographic anchor, a channel anchor, or a time domain anchor) are defined. The second apparatus needs to send only anchor-based dynamic information. This helps reduce indication overheads of the uplink precoding information.

In a possible implementation, the second indication information includes at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

In the method, a correspondence between content of the second indication information and a type of the anchor is defined. For example, when the N anchors are geographic anchors, the second indication information includes incremental information of geographic locations corresponding to the N anchors (for example, incremental information of beam information of a channel corresponding to a geographic location of the anchor).

In a possible implementation, the second apparatus receives fourth indication information, where the fourth indication information indicates P anchors, and the N anchors are partially or completely the same as the P anchors.

In the method, the second apparatus may receive the P anchors selected by the first apparatus, so that the second apparatus performs selection from the P anchors, to determine the N anchors.

According to a third aspect, this application provides a communication method, and the method is implemented through interaction between a first apparatus and a second apparatus. For example, the first apparatus may be a terminal, and the second apparatus may be a network device. The communication method includes the following steps: The second apparatus sends first indication information, where the first indication information indicates N anchors, the N anchors are associated with N pieces of anchor information, and N is a positive integer; the first apparatus receives the first indication information; the second apparatus sends second indication information, where the second indication information indicates incremental information associated with the N anchors, and the N pieces of anchor information and the incremental information are associated with uplink precoding information; and the first apparatus receives the second indication information.

In the method, the second apparatus may first send the first indication information indicating the N anchors, to indicate the N pieces of anchor information to the first apparatus. For example, the N pieces of anchor information include all or a part of the uplink precoding information. The second apparatus may further send the incremental information associated with the N anchors. The incremental information associated with the anchor is an increment of anchor information, or the other part of precoding generation information. This helps reduce indication overheads of the uplink precoding information. Specifically, the incremental information may mean that a value in the information may be changed (may be increased or decreased) based on an original value, or may mean that a value type or a parameter type in the information is added. For example, a first matrix related to precoding is configured in the anchor information, and a second matrix related to precoding is additionally configured in the incremental information.

Optionally, for another implementation of the communication method, refer to the corresponding descriptions in the first aspect and the second aspect. Details are not described herein again.

According to a fourth aspect, this application provides a communication apparatus. The communication apparatus may be a terminal, or may be an apparatus of a terminal, or may be an apparatus that can be used together with a terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive first indication information, where the first indication information indicates N anchors, the N anchors are associated with N pieces of anchor information, and N is a positive integer. The communication unit is further configured to receive second indication information, where the second indication information indicates incremental information associated with the N anchors, and the N pieces of anchor information and the incremental information are associated with uplink precoding information.

In a possible implementation, the processing unit is configured to perform uplink precoding based on the N pieces of anchor information and the incremental information, to obtain and send an uplink signal.

In a possible implementation, the communication unit is configured to receive third indication information, where the third indication information indicates M pieces of anchor information of M anchors, the anchor is at least one of a geographic anchor, a channel anchor, and a time domain anchor, M is a positive integer greater than or equal to N, and the N anchors belong to the M anchors.

In a possible implementation, when the anchor is a geographic anchor, anchor information of the geographic anchor includes one piece or a combination of a plurality of pieces of information such as geographic location information, channel state information, and precoding information; or when the anchor is a channel anchor, anchor information of the channel anchor includes one piece or a combination of a plurality of pieces of information such as channel state information and precoding information obtained based on the channel state information; or when the anchor is a time domain anchor, anchor information of the time domain anchor includes one piece or a combination of a plurality of pieces of information such as time domain information, channel state information, and precoding information.

In a possible implementation, the geographic anchor represents a geographic location, the channel anchor represents a preset channel state, and the time domain anchor represents a time domain position.

In a possible implementation, the second indication information includes at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

In a possible implementation, the communication unit is configured to send fourth indication information, where the fourth indication information indicates P anchors, and the N anchors are partially or completely the same as the P anchors.

According to a fifth aspect, this application provides a communication apparatus. The communication apparatus may be a network device, or may be an apparatus of a network device, or may be an apparatus that can be used together with a network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send first indication information, where the first indication information indicates N anchors, the N anchors are associated with N pieces of anchor information, and N is a positive integer. The communication unit is further configured to send second indication information, where the second indication information indicates incremental information associated with the N anchors, and the N pieces of anchor information and the incremental information are associated with uplink precoding information.

In a possible implementation, the communication unit is configured to send third indication information, where the third indication information indicates M pieces of anchor information of M anchors, the anchor is at least one of a geographic anchor, a channel anchor, and a time domain anchor, M is a positive integer greater than or equal to N, and the N anchors belong to the M anchors.

In a possible implementation, when the anchor is a geographic anchor, anchor information of the geographic anchor includes one piece or a combination of a plurality of pieces of information such as geographic location information, channel state information, and precoding information; or when the anchor is a channel anchor, anchor information of the channel anchor includes one piece or a combination of a plurality of pieces of information such as channel state information and precoding information obtained based on the channel state information; or when the anchor is a time domain anchor, anchor information of the time domain anchor includes one piece or a combination of a plurality of pieces of information such as time domain information, channel state information, and precoding information.

In a possible implementation, the geographic anchor represents a geographic location, the channel anchor represents a preset channel state, and the time domain anchor represents a time domain position.

In a possible implementation, the second indication information includes at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

In a possible implementation, the communication unit is configured to receive fourth indication information, where the fourth indication information indicates P anchors, and the N anchors are partially or completely the same as the P anchors.

In a possible implementation, the processing unit is configured to process sent or received data. For example, before the communication unit sends the first indication information, the processing unit is configured to determine the N anchors.

For the fourth aspect and the fifth aspect, in an example, the processing unit may be a processor, and the communication unit may be a transceiver unit, a transceiver, or a communication interface. It may be understood that, when the communication apparatus is a communication device (for example, a terminal or a network device), the communication unit may be a transceiver (for example, the transceiver includes a transmitter and a receiver) in the communication apparatus, for example, implemented by using an antenna, a feeder, and a codec in the communication apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is enabled to implement at least one of the following: the method according to any one of the first aspect and the possible implementations of the first aspect, and the method according to any one of the second aspect and the possible implementations of the second aspect. Optionally, the processor is coupled to the memory.

According to a seventh aspect, this application provides a communication system. The communication system includes at least one apparatus or device in the fourth aspect to the sixth aspect, so that the at least one apparatus or device performs at least one of the following: the method according to any one of the first aspect and the possible implementations of the first aspect, and the method according to any one of the second aspect and the possible implementations of the second aspect.

According to an eighth aspect, this application provides a computer-readable storage medium. The computer-readable storage medium stores instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a ninth aspect, this application provides a computer program product, including instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a tenth aspect, this application provides a chip, and the chip includes a processor (or a logic circuit). Optionally, the chip may further include a communication interface (or an interface), configured to implement at least one of the following: the method according to any one of the first aspect and the possible implementations of the first aspect, and the method according to any one of the second aspect and the possible implementations of the second aspect. In a possible implementation, if the chip is a smallest processing unit in an entire device, the chip may be a processor, or may include a processor and a memory, or may include a processor, a memory, and a transceiver, and is configured to implement at least one of the following: the method according to any one of the first aspect and the possible implementations of the first aspect, and the method according to any one of the second aspect and the possible implementations of the second aspect.

According to an eleventh aspect, this application provides a chip system. The chip system includes a processor and an interface. Optionally, the chip system may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete device.

### BRIEF DESCRIPTION OF DRAWINGS

FIG. 1 is a diagram of a communication system according to this application;
FIG. 2 is a schematic flowchart of a communication method according to this application;
FIG. 3 is a diagram of a geographic anchor according to this application;
FIG. 4 is a schematic flowchart of a communication method applied to a network scenario including a geographic anchor according to this application;
FIG. 5 is a diagram of a channel anchor according to this application;
FIG. 6 is a schematic flowchart of a communication method applied to a network scenario including a channel anchor according to this application;
FIG. 7 is a diagram of a time domain anchor according to this application;
FIG. 8 is a schematic flowchart of a communication method applied to a network scenario including a time domain anchor according to this application;
FIG. 9 is a diagram of a communication apparatus according to this application; and
FIG. 10 is a diagram of another communication apparatus according to this application.

### DESCRIPTION OF EMBODIMENTS

In embodiments of this application, "/" may represent an "or" relationship between associated objects, for example, A/B may represent A or B; and "and/or" may represent that there are three relationships between the associated objects, for example, A and/or B may represent the following three cases: Only A exists, both A and B exist, and only B exists, where A and B may be singular or plural. For ease of describing the technical solutions in embodiments of this application, in embodiments of this application, words such as "first" and "second" may be used to distinguish between technical features with a same function or similar functions. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes technical solutions in embodiments of this application with reference to the accompanying drawings in embodiments of this application.

To reduce indication overheads of uplink precoding, this application provides a communication method and a communication apparatus. The communication method helps reduce indication overheads of uplink precoding, and also helps reduce coding calculation complexity.

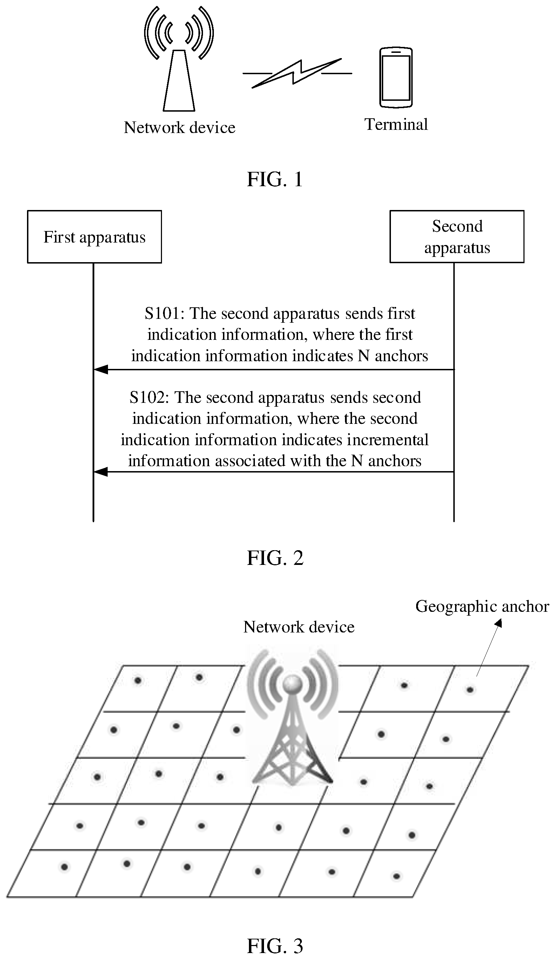

The communication method provided in this application may be applied to a communication system shown in FIG. 1. For example, the communication system includes a network device and a terminal. In FIG. 1, only one network device and one terminal are used as an example for description. A quantity of devices is not limited in this application.

The communication system in this application may include but is not limited to communication systems of various radio access technologies (radio access technologies, RATs), for example, may be a new radio (new radio, NR) system, or may be another communication system such as a next-generation (6G) communication system, provided that there are two entities in the communication system, where one entity may send information to the other entity or receive information sent by the other entity. The information herein may be a physical signal such as a preamble or a reference signal; may be physical layer control information such as downlink control information (downlink control information, DCI) and an uplink control new signal (uplink control information, UCI); may be control plane (control plane, CP) data such as a radio resource control (radio resource control, RRC) message; or may be user plane (user plane, UP) data. Optionally, the information may be information related to another specific scenario or application, for example, related data (for example, gradient information, training data, and a model parameter) generated by enabling or by artificial intelligence (artificial intelligence, AI) or machine learning (machine learning, ML), related data generated by enabling a sensing (sensing) function or by sensing, or the like.

Optionally, this application may be applied to dynamic-grant-based transmission, or may be applied to grant-free transmission, for example, applied to two-step or four-step random access (2-step/4-step random access), or applied to preconfigured uplink resource (preconfigured uplink resource, PUR)/grant configuration (configured grant, CG); and may be further applied to a high-frequency scenario, for example, a millimeter wave scenario, or may be further applied to a low-frequency scenario, for example, a 700/900 megahertz (MHz) or 2.1/2.6/3.5 gigahertz (GHz) frequency band. This application may be further applied to a licensed (licensed) frequency band, or may be further applied to an unlicensed (unlicensed) frequency band. This application may be further applied to an air interface (Uu) link between a terminal and a base station, or may be further applied to a sidelink (sidelink) such as device to device (device to device, D2D), or may be further applied to a communication link of a non-terrestrial network (non-terrestrial network, NTN), or the like.

The terminal, also referred to as a terminal (terminal) device, user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, for example, the terminal is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved network, or a terminal in a future communication system. This application may be applied to a terminal in a connected state or an active (ACTIVE) state, or may be applied to a terminal in a non-connected (INACTIVE) state or an idle (IDLE) state, or may be applied to a terminal that is not in the three states, for example, UE that is not attached to a network or that does not perform downlink synchronization with a network.

The network device in this application is a radio access network (radio access network, RAN) node (or device) that connects the terminal to a wireless network, and may also be referred to as a base station. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like.

In a possible implementation, the network device may include a central unit (central unit, CU) node, or a distributed unit (distributed unit, DU) node, or a RAN device including a CU node and a DU node. The RAN device including the CU node and the DU node splits protocol layers of an eNB in a long-term evolution (long-term evolution, LTE) system. Functions of some protocol layers are centrally controlled by a CU, functions of some or all of remaining protocol layers are distributed in a DU, and the CU centrally controls the DU. In some deployments of the network device, the CU may be further split into a CU-control plane (control plane, CP), a CU-user plane (user plane, UP), and the like. In another possible implementation, the network device may alternatively be an antenna unit (radio unit, RU) or the like. In another possible implementation, the network device may alternatively be an open radio access network (open radio access network, ORAN) architecture or the like. A specific type of the network device is not limited in this application. For example, when the network device is of an ORAN architecture, the network device in embodiments of this application may be an access network device in an ORAN, a module in an access network device, or the like. In an ORAN system, a CU may also be referred to as an open central unit (open CU, O-CU), a DU may also be referred to as an open distributed unit (O-DU), the CU-DU may also be referred to as an open central unit-distributed unit (O-CU-DU), the CU-UP may also be referred to as an open central unit-control plane (O-CU-UP), and the RU may also be referred to as an open antenna unit (O-RU).

It should be noted that:

"Sending" and "receiving" in embodiments of this application represent signal transfer directions. For example, "sending information to a terminal" may be understood as a destination of the information being the terminal device, and may include direct sending through an air interface, or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may also be understood as "outputting" of a chip interface, and "receiving" may also be understood as "inputting" of the chip interface.

In other words, sending and receiving may be performed between devices, for example, between a network device and a terminal device; or may be performed inside a device, for example, sending or receiving between parts, modules, chips, software modules, or hardware modules inside the device through a bus, a cable, or an interface.

It may be understood that necessary processing such as encoding and modulation may be performed on the information between the source at which the information is sent and the destination, but the destination may understand valid information from the source. Similar descriptions in this application may be understood similarly, and details are not described again.

In embodiments of this application, "indication" may include a direct indication and an indirect indication, or may include an explicit indication and an implicit indication. Information indicated by a piece of information (for example, indication information described below) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information; and for a receiver of the indication information, the indication information may be for determining to-be-indicated information.

I. For ease of understanding, the following describes in detail definitions of related nouns in this application.

### 1. Uplink data sending:

In a 3GPP NR system, there are two uplink (uplink, UL) sending modes: a codebook-based (codebook-based, CB) sending mode and a non-codebook-based (non-codebook-based, NCB) sending mode. The CB sending mode may be applied to a frequency division duplex (frequency division duplex, FDD) or (time division duplex, TDD) scenario, and the NCB sending mode is mainly applied to a TDD scenario.

### (1) CB UL transmission mode:

A base station may configure, for UE, sounding reference signal (sounding reference signal, SRS) resources (SRS resources) that are of one or more ports and that belong to a same resource set (resource set). It is assumed that a quantity of SRS ports is P. The UE sends SRSs of one or P ports by using an SRS resource. Different SRS resources may have different beam directions. The base station measures uplink channel state information (channel state information, CSI) based on the SRS. For example, when there is uplink data that needs to be sent, the base station schedules an uplink resource, and sends configuration information to the UE. The configuration information includes, for example, information indicating which SRS resource is to be used, namely, uplink beam (beam) information; a quantity (L) of layers, precoding information (for example, a precoding matrix indicator (transmitted precoding matrix indicator, TPMI)), and the like used for uplink in a beam corresponding to the SRS resource; and a plurality of demodulation reference signal (demodulation reference signal, DMRS) ports, where a quantity of DMRS ports is equal to L. Correspondingly, the UE receives the configuration information, first inserts DMRSs of L ports into L data streams, and then performs precoding according to an indication of the TPMI, to obtain signals of the P ports. Then, the UE sends the signals of the P ports in a same sending manner as that of the SRSs of the P ports.

### (2) NCB UL transmission mode:

The base station may configure, for the UE, SRS resources that are of P single ports and that belong to a same SRS resource set, where beam directions of SRSs of the P single ports may be different. The base station sends a downlink channel state information reference signal (channel state information reference signal, CSI-RS) to the UE. Correspondingly, the UE receives the CSI-RS, and measures downlink channel state information relative to the P SRS ports based on the downlink CSI-RS. The UE may infer uplink channel state information according to channel reciprocity, and calculate a sending manner (a manner such as digital precoding and analog precoding) of a corresponding SRS. The UE sends an uplink SRS by using the SRS resources of the P single ports in the calculated SRS sending manner. Correspondingly, the base station receives the P SRSs. The base station may select L SRSs (L≤P) with low interference and noise from the P SRSs, and deliver indexes (SR indexes, SRIs) of the L SRSs to the UE by using DCI. The base station may further configure DMRSs of a plurality of ports for the UE, where the quantity of DMRS ports is L. The UE receives the DCI, inserts the DMRSs of the L ports into the L data streams according to an indication of the DCI, and then sends the L data streams in a same sending manner as that of the previously sent L SRSs.

### II. Communication method provided in this application:

For example, FIG. 2 is a schematic flowchart of a communication method according to this application. The method may be implemented through interaction between a first apparatus and a second apparatus. The first apparatus is, for example, a terminal or an apparatus of a terminal, and the second apparatus is, for example, a network device or an apparatus of a network device.

S101: The second apparatus sends first indication information, where the first indication information indicates N anchors; and correspondingly, the first apparatus receives the first indication information.

The anchor is a type of parameter defined in this application. For example, the anchor is an amount related to uplink precoding information, and a piece of precoding information may be associated based on the amount. For example, the anchor may include but is not limited to a geographic anchor, a channel anchor, a time domain anchor, and the like. The geographic anchor represents a geographic location. For example, one or more geographic anchors may be one or more geographic locations in which services are centralized and a channel state is stable; or may be geographic location information related to the terminal. Channel state information may be determined based on the geographic location information, to determine precoding information. The channel anchor represents a preset channel state. For example, one or more channel anchors may be one or more channel states, or may be channel state information related to the terminal. Precoding information may be determined based on the channel state information. The time domain anchor represents time domain information. For example, the time domain anchor may be a specified frame, subframe, slot, or symbol, for example, specific time domain information indicated by a parameter such as a frame index, a subframe index, a slot index, or a symbol index; or may be time domain information of the terminal. Channel state information corresponding to the time domain information may be obtained based on the time domain information, to determine precoding information.

The anchor is associated with anchor information. The anchor information is information related to the anchor. For example, anchor information is different for different types of anchors. For example, anchor information associated with the geographic anchor may include but is not limited to one piece or a combination of a plurality of pieces of information such as geographic location information, channel state information, and precoding information. For another example, anchor information associated with the channel anchor may include but is not limited to one piece or a combination of a plurality of pieces of information such as channel state information (for example, a part or all of parameters of a channel state) and precoding information obtained based on the channel state information. For another example, anchor information associated with the time domain anchor may include but is not limited to one piece or a combination of a plurality of pieces of information such as time domain information, channel state information, and precoding information.

The first indication information indicates the N anchors. For example, the first indication information may include information (for example, an identifier of an anchor, or a unique indication used to distinguish between different anchors) about the N anchors, or the first indication information includes N pieces of anchor information. The N pieces of anchor information are associated with the N anchors, so that the N anchors can be determined.

Optionally, the anchor information is associated with the precoding information. For example, the anchor information may be a part of precoding generation information, or the anchor information is the precoding information.

Optionally, before the second apparatus sends the first indication information, the method further includes the following step:
The second apparatus determines the N anchors or the N pieces of anchor information.

In a possible implementation, the second apparatus determines the N anchors or the N pieces of anchor information through measurement or in another manner. For example, the second apparatus may determine the N anchors or the N pieces of anchor information through measurement and transmission performance statistics collection (for example, measurement and statistics collection of the channel state information).

In another possible implementation, the second apparatus receives fourth indication information from the first apparatus, where the fourth indication information indicates P anchors. The second apparatus determines the N anchors based on the P anchors, where the N anchors are partially or completely the same as the P anchors. For example, the first apparatus determines the N anchors through measurement, and sends the N anchors and the N pieces of anchor information to the second apparatus. Optionally, the first apparatus may periodically update an anchor selection result.

Optionally, before the second apparatus sends the first indication information, the method further includes the following steps:
The second apparatus determines M pieces of anchor information of M anchors; and
the second apparatus sends third indication information, where the third indication information indicates the M pieces of anchor information of the M anchors; and correspondingly, the first apparatus receives the third indication information.

The anchor is at least one of the geographic anchor, the channel anchor, and the time domain anchor, M is a positive integer greater than or equal to N, and the N anchors belong to the M anchors. For example, the second apparatus may preconfigure the M pieces of anchor information of the M anchors, and indicate the preconfigured M pieces of anchor information to the first apparatus; and then indicate the N anchors and the N pieces of anchor information in the M anchors and the M pieces of anchor information to the first apparatus, so that the first apparatus determines the N anchors and the N pieces of anchor information that are used.

Optionally, the M anchors and the M pieces of anchor information are generated and recorded in a form of a table (list) or in another form similar to the table. For example, it is assumed that the anchor is a geographic anchor. In this case, the anchor information may be one piece or a combination of a plurality of pieces of information such as geographic location information, channel state information, and precoding information. Table 1 shows a relationship between an anchor and anchor information.

**Table 1: Relationship between an anchor and anchor information**

| Anchor | Anchor information |
|---|---|
| Geographic anchor 1 | Combination of location information and channel state information of the geographic anchor 1 |
| Geographic anchor 2 | Combination of location information and channel state information of the geographic anchor 2 |
| ... | ... |
| Geographic anchor M | Combination of location information and channel state information of the geographic anchor M |

It can be learned that the second apparatus may preconfigure the M pieces of anchor information of the M anchors; and after the N anchors are subsequently determined, the N pieces of anchor information of the N anchors may be directly obtained through query. Optionally, after receiving the third indication information, the first apparatus may preconfigure the M pieces of anchor information of the M anchors (for example, the first apparatus also generates and records a relationship between an anchor and anchor information, as shown in Table 1) based on the M pieces of anchor information that is of the M anchors and that is indicated by the third indication information.

Optionally, the second apparatus may not preconfigure the M pieces of anchor information of the M anchors, and therefore does not send the third indication information to the first apparatus. Optionally, the second apparatus directly obtains the N anchors and the N pieces of anchor information through measurement or in another manner each time. Alternatively, each time before sending the first indication information, the second apparatus may obtain the M pieces of anchor information of the M anchors through measurement or in another manner, to determine the N anchors and the N pieces of anchor information based on the M anchors and the M pieces of anchor information. Alternatively, each time before sending the first indication information, the second apparatus may obtain the M pieces of anchor information of the M anchors through measurement or in another manner, and indicate the M anchors and the M pieces of anchor information to the first apparatus. The first apparatus determines the P anchors and P pieces of anchor information based on the M anchors and the M pieces of anchor information, and feeds back the P anchors and the P pieces of anchor information to the second apparatus. The second apparatus finally determines the N anchors and the N pieces of anchor information from the P anchors and the P pieces of anchor information. For example, when the second apparatus does not preconfigure the M pieces of anchor information of the M channel anchors, the first apparatus may determine, through measurement of a reference signal and according to uplink and downlink reciprocity and some criteria (for example, channel similarity and capacity maximization), anchor information corresponding to the P channel anchors, and therefore obtain the P channel anchors. The first apparatus sends the P channel anchors and the corresponding anchor information to the second apparatus. The second apparatus determines the N channel anchors through channel measurement and with reference to a result reported by the first apparatus, and delivers the N channel anchors to the first apparatus, to complete an anchor agreement between the first apparatus and the second apparatus.

S102: The second apparatus sends second indication information, where the second indication information indicates incremental information associated with the N anchors; and correspondingly, the first apparatus receives the second indication information.

The incremental information associated with the anchor is an increment of the anchor information, or the other part of the precoding generation information. Specifically, the incremental information may mean that a value in the information may be changed (may be increased or decreased) based on an original value, or may mean that a value type or a parameter type in the information is added. For example, a first matrix related to precoding is configured in the anchor information, and a second matrix related to precoding is additionally configured in the incremental information.

Optionally, the incremental information is associated with the precoding information. For example, when the anchor information is precoding information (for example, includes all of the precoding generation information), the incremental information includes that a value in the anchor information is increased or decreased based on an original value, and/or a value type or a parameter type in the anchor information is added. For another example, when the anchor information is a part of the precoding generation information, the incremental information includes the other part of the precoding generation information. In this case, the precoding information may be generated based on the anchor information and the incremental information.

The second indication information includes at least one of the following: incremental information of geographic location information corresponding to the N anchors, incremental information of channel state information corresponding to the N anchors, incremental information of precoding information corresponding to the N anchors, and incremental information of time domain information corresponding to the N anchors. For example, it is assumed that the anchors are N geographic anchors, and anchor information of the geographic anchor includes a combination of geographic location information and channel state information. In this case, the second indication information includes incremental information of geographic location information of the N geographic anchors and incremental information of channel state information of the N geographic anchors. For another example, it is assumed that the anchors are N channel anchors, and anchor information of the channel anchors includes precoding information obtained based on channel state information. In this case, the second indication information includes incremental information of precoding information corresponding to the N channel anchors.

Optionally, before the second apparatus sends the first indication information, the method further includes the following step:

The second apparatus determines the incremental information associated with the N anchors. For example, it is assumed that the anchors are N geographic anchors, and anchor information of the geographic anchor includes a combination of geographic location information and channel state information. In this case, the second apparatus determines, through measurement and calculation statistical results, incremental information (for example, a moving distance of a new geographic location relative to an original geographic location or coordinates of a new geographic location) of geographic location information corresponding to the N geographic anchors, and incremental information (for example, a value change of new channel state information relative to original channel state information) of channel state information of the N geographic anchors.

Optionally, after S102, the method further includes the following step: The first apparatus performs uplink precoding based on the N pieces of anchor information and the incremental information, to obtain and send an uplink signal. For example, the first apparatus determines the precoding information based on a combination of the geographic location information and the channel state information, and the incremental information of the geographic location information and the incremental information of the channel state information, and performs, based on the precoding information, uplink precoding on to-be-encoded data, to obtain and send the uplink signal.

In this embodiment, the second apparatus may first send the first indication information indicating the N anchors, to indicate the N pieces of anchor information to the first apparatus. For example, the N pieces of anchor information include all or a part of the uplink precoding information. The second apparatus may further send the incremental information associated with the N anchors. The incremental information associated with the anchor is the increment of the anchor information, or the other part of the precoding generation information. This helps reduce indication overheads of the uplink precoding information.

III. Specific implementation process of the communication method, provided in this application, in which different types of anchors are used:
Example 1: A predefined geographic location is determined as a geographic anchor.

For example, FIG. 3 is a diagram of a geographic anchor according to this application. It is assumed that a specified area (for example, an entire large diamond-shaped area in FIG. 3) near a network device is considered as an overall geographic location (where the geographic location may be determined based on information such as a longitude and a latitude), and the overall geographic location is divided into a plurality of unit geographic locations based on a unit geographic location (for example, each small diamond-shaped area in FIG. 3). Each unit geographic location corresponds to one geographic anchor. Optionally, the geographic anchor may be represented by using coordinates (for example, a central coordinate point of each small diamond-shaped area in FIG. 3 represents one geographic anchor), or may be represented by using a geographic location range (for example, a geographic location range of each small diamond-shaped area in FIG. 3). This is not limited in this application.

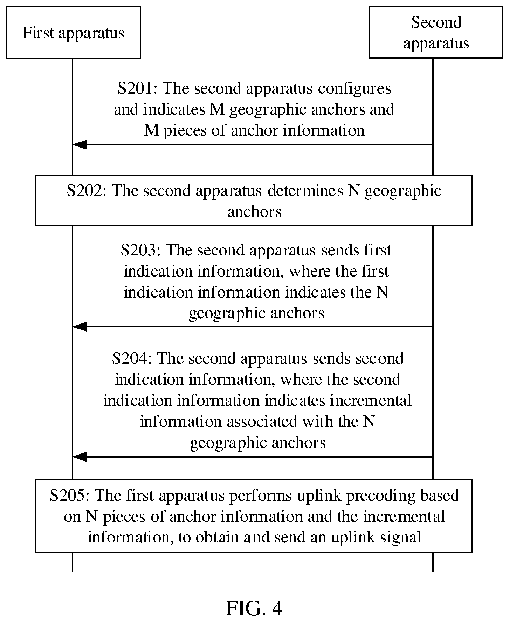

For example, FIG. 4 is a schematic flowchart of a communication method applied to a network scenario including a geographic anchor according to this application. A specific procedure is implemented through interaction between a first apparatus and a second apparatus, and includes the following steps.

S201: The second apparatus configures and indicates M geographic anchors and M pieces of anchor information.

For example, the second apparatus determines, through measurement and statistics collection, M geographic locations as the M geographic anchors, and sends the M pieces of anchor information of the M anchors to the first apparatus. A location of the geographic anchor may be selected from locations in which services are concentrated and a channel state is stable. Correspondingly, the first apparatus receives the M geographic anchors and the M pieces of anchor information, and configures the M geographic anchors and the M pieces of anchor information (for example, records or stores the M geographic anchors and the M pieces of anchor information).

In a possible implementation, anchor information of the geographic anchor may be a combination of geographic location information and channel state information, and the geographic location information is associated with the channel state information. The geographic location information may be a relative location of the geographic location relative to the second apparatus, or may be a relative location of the geographic location relative to another reference point, or may be an absolute location obtained based on a longitude and a latitude. The channel state information may be a value of a channel state itself, or may be an index of a predefined channel state list, or may be a part or all of parameters of a channel state. For example, the channel state information may be beam information of a channel, delay domain information of a channel, a Q matrix obtained after orthogonal triangular QR decomposition is performed on a matrix related to a channel state, or the like. The M pieces of anchor information include a combination of the foregoing information. For example, for a geographic anchor 1, anchor information 1 of the geographic anchor 1 includes information such as a relative location of the geographic anchor 1 relative to the second apparatus, beam information of a channel state 1 associated with the geographic anchor 1, delay domain information of the channel state 1, and a Q matrix obtained after QR decomposition is performed on a channel matrix of the channel state 1.

In another possible implementation, the anchor information of the geographic anchor may be a combination of the geographic location information and precoding information. For a description of the geographic location information, refer to the foregoing description. The precoding information is determined based on the channel state information associated with the geographic location information. For example, the precoding information may be a value of a precoding matrix itself, or may be an index of a predefined precoding matrix list, or may be a part or all of parameters in a precoding matrix generation process. The M pieces of anchor information include a combination of the foregoing information. For example, for a geographic anchor 2, anchor information 2 of the geographic anchor 2 includes information such as an absolute location corresponding to a longitude and a latitude of the geographic anchor 2, channel state information 2 associated with the geographic anchor 2, and a precoding matrix determined based on the channel state information 2.

S202: The second apparatus determines N geographic anchors.

In a possible implementation, the second apparatus receives fourth indication information from the first apparatus, where the fourth indication information indicates P anchors. The second apparatus determines the N anchors based on the P anchors, where the N anchors are partially or completely the same as the P anchors. In this implementation, the first apparatus determines the P anchors. The P anchors may be the N anchors finally used, or may include the N anchors finally used. For example, the first apparatus selects, through measurement, the P proper geographic anchors from the configured M geographic anchors, for example, through positioning, selects one closest geographic anchor or selects a plurality of geographic anchors within a preset range. The one or more geographic anchors are the P geographic anchors. The first apparatus indicates the P geographic anchors to the second apparatus. Optionally, the first apparatus may periodically update an anchor selection result. For example, the first apparatus may send information about a currently selected geographic anchor to the second apparatus in a random access procedure; or the first apparatus may send geographic anchor information to the second apparatus based on uplink control information (uplink control information, UCI) after random access succeeds. Optionally, if a value of P is greater than 1 (that is, the first apparatus selects at least two geographic anchors), the first apparatus may further send weight coefficients corresponding to the at least two geographic anchors to the first apparatus. The weight coefficients indicate weights of different geographic anchors when the N geographic anchors are subsequently selected. For example, the fourth indication information sent by the first apparatus further includes weight coefficients respectively corresponding to the P geographic anchors, or the first apparatus independently sends fifth indication information, where the fifth indication information indicates the weight coefficients respectively corresponding to the P geographic anchors.

In another possible implementation, the second apparatus determines the N geographic anchors through measurement and transmission performance statistics collection and with reference to the P geographic anchors sent by the first apparatus and optional weight coefficients. For example, if the second apparatus determines, through measurement and transmission performance statistics collection, that channel states associated with the P geographic anchors selected by the first apparatus are stable, the second apparatus determines to use the P geographic anchors and anchor information (namely, P=N). Alternatively, if the second apparatus determines that channel states associated with the N geographic anchors in the P geographic anchors selected by the first apparatus are stable, the second apparatus determines to use the N geographic anchors and anchor information (namely, P>N).

S203: The second apparatus sends first indication information, where the first indication information indicates the N geographic anchors; and correspondingly, the first apparatus receives the first indication information.

For related descriptions of the first indication information, refer to the corresponding descriptions in the second part. Details are not described herein again. For example, the second apparatus sends the first indication information to the first apparatus, to complete an anchor agreement between the first apparatus and the second apparatus. That is, the two apparatuses use the same N geographic anchors.

S204: The second apparatus sends second indication information, where the second indication information indicates incremental information associated with the N geographic anchors; and correspondingly, the first apparatus receives the second indication information.

For example, the second apparatus dynamically delivers, based on the agreed N geographic anchors, incremental information used to generate uplink precoding. In Example 1, it is assumed that the incremental information is incremental information of the geographic anchor. For example, the incremental information of the geographic anchor may include one piece or a combination of a plurality of pieces of incremental information of the geographic location, incremental information of the channel state information, and incremental information of the precoding information. The incremental information of the geographic location may be incremental information of a relative geographic location, or may be incremental information of an absolute geographic location. The incremental information of the channel state information may be incremental information of the value of the channel state itself, or may be incremental information of the index of the predefined channel state list, or may be incremental information of the part or all of parameters of the channel state. For example, the incremental information of the channel state information may include but is not limited to incremental information of the beam information of the channel, incremental information of the delay domain information of the channel, the R matrix obtained after QR decomposition is performed on the matrix related to the channel state information, or the like. The incremental information of the precoding information may be incremental information of the value of the precoding matrix itself, or may be incremental information of the index of the predefined precoding matrix list, or may be incremental information of the part or all of parameters in the precoding matrix generation process.

S205: The first apparatus performs uplink precoding based on the N pieces of anchor information and the incremental information, to obtain and send an uplink signal.

For example, the first apparatus determines, based on the N pieces of anchor information of the agreed N geographic anchors and the incremental information dynamically delivered by the second apparatus, the precoding information used for sending the uplink data signal, to complete sending of the uplink data signal.

Optionally, if the anchor information is the combination of the geographic location information and the channel state information, the first apparatus may obtain target geographic location information based on the geographic location information in the anchor information and the dynamically delivered incremental information of the geographic location information, obtain related channel state information based on the target geographic location information, and then obtain, based on the related channel state information, the uplink precoding information for current uplink data transmission, to complete sending of the uplink data signal. Optionally, the first apparatus may obtain, based on the channel state information in the anchor information and the dynamically delivered incremental information of the channel state information, channel state information corresponding to current data transmission, and generate, based on the channel state information corresponding to current data transmission, the uplink precoding information for current data transmission, to complete sending of the uplink data signal.

Optionally, if the anchor information is the combination of the geographic location information and the precoding information, the first apparatus may obtain target geographic location information based on the geographic location information in the anchor information and the dynamically delivered incremental information of the geographic location information, and obtain, based on the target geographic location information, the uplink precoding information for current data transmission, to complete sending of the uplink data signal. Optionally, the first apparatus may alternatively obtain, based on the precoding information in the anchor information and the dynamically delivered precoding incremental information, the uplink precoding information for current data transmission, to complete sending of the uplink data signal.

In Example 1, the geographic anchor is introduced, and the second apparatus needs to dynamically send only a part of uplink precoding information (for example, incremental information based on the geographic anchor) based on the geographic anchor. This helps reduce signaling overheads of uplink precoding, and reduce complexity of uplink precoding calculation.

Example 2: A predefined channel state is determined as a channel anchor.

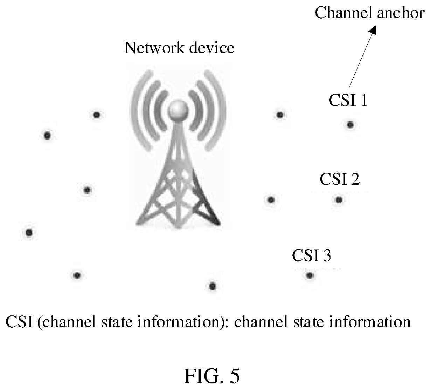

For example, FIG. 5 is a diagram of a channel anchor according to this application. It is assumed that a plurality of channel states (for example, CSI 1, CSI 2, and CSI 3 in FIG. 5) near a network device are defined as a plurality of channel anchors. Optionally, the channel anchor may be represented by using a part or all of parameters of a channel state. For example, a channel anchor 1 is represented by using a part of parameters (for example, an index of a channel beam) of the CSI 1. This is not limited in this application.

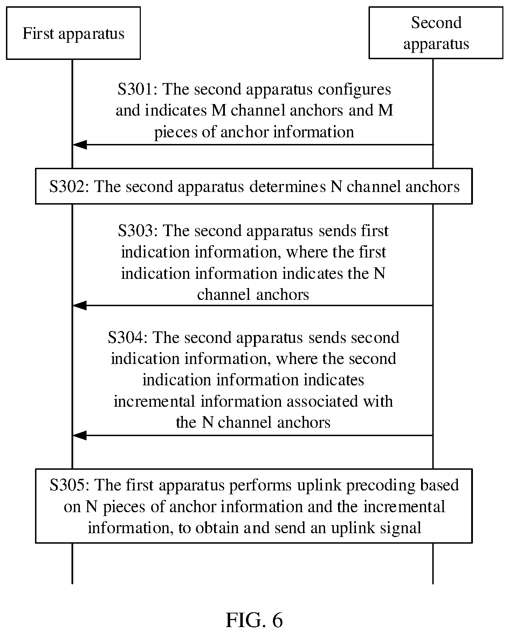

For example, FIG. 6 is a schematic flowchart of a communication method applied to a network scenario including a channel anchor according to this application. A specific procedure is implemented through interaction between a first apparatus and a second apparatus, and includes the following steps.

S301: The second apparatus configures and indicates M channel anchors and M pieces of anchor information.

For example, the second apparatus determines, through measurement and statistics collection, M predefined channel states as the M channel anchors, and sends the M pieces of anchor information of the M anchors to the first apparatus.

In a possible implementation, anchor information of the channel anchor may be channel state information. The channel state information may be a value of a channel state itself, or may be an index of a predefined channel state list, or may be a part or all of parameters of a channel state. For example, the channel state information may be beam information of a channel, delay domain information of a channel, a Q matrix obtained after QR decomposition is performed on a matrix related to a channel state, or the like. For example, for a channel anchor 1, anchor information 1 of the channel anchor 1 includes information such as beam information of a channel state 1, delay domain information of the channel state 1, and a Q matrix obtained after QR decomposition is performed on a channel matrix of the channel state 1.

In another possible implementation, the anchor information of the channel anchor may be precoding information obtained based on the channel state information. The precoding information may be a value of a precoding matrix itself, or may be an index of a predefined precoding matrix list, or may be a part or all of parameters in a precoding matrix generation process. For example, for a channel anchor 2, anchor information 2 of the channel anchor 2 includes information such as channel state information 2 and a precoding matrix determined based on the channel state information 2.

S302: The second apparatus determines N channel anchors.

In a possible implementation, the second apparatus receives fourth indication information from the first apparatus, where the fourth indication information indicates P anchors. The second apparatus determines the N anchors based on the P anchors, where the N anchors are partially or completely the same as the P anchors. In this implementation, the first apparatus determines the P anchors. The P anchors may be the N anchors finally used, or may include the N anchors finally used. For example, the first apparatus determines the P channel anchors through measurement of a downlink reference signal (for example, a CSI-RS or a synchronization signal block (synchronization signal/PBCH (physical broadcast channel, physical broadcast channel) block, SSB)) and according to uplink and downlink reciprocity and some criteria (for example, criteria such as channel similarity and capacity maximization). Optionally, the first apparatus may periodically update an anchor selection result. For example, the first apparatus may send information about a currently selected channel anchor to the second apparatus in a random access procedure; or the first apparatus may send channel anchor information to the second apparatus after random access succeeds. Optionally, if a value of P is greater than 1 (that is, the first apparatus selects at least two channel anchors), the first apparatus may further send weight coefficients corresponding to the at least two channel anchors to the first apparatus. The weight coefficients indicate weights of different channel anchors when the N channel anchors are subsequently selected. For example, the fourth indication information sent by the first apparatus further includes weight coefficients respectively corresponding to the P channel anchors, or the first apparatus independently sends fifth indication information, where the fifth indication information indicates the weight coefficients respectively corresponding to the P channel anchors.

In another possible implementation, the second apparatus determines the N channel anchors based on channel measurement and with reference to the P channel anchors sent by the first apparatus and optional weight coefficients. For example, if the second apparatus determines, based on channel measurement, that channel states associated with the P channel anchors selected by the first apparatus are stable, the second apparatus determines to use the P channel anchors and anchor information (namely, P=N). Alternatively, if the second apparatus determines that channel states associated with the N channel anchors in the P channel anchors selected by the first apparatus are stable, the second apparatus determines to use the N channel anchors and anchor information (namely, P>N).

In still another possible implementation, the second apparatus selects the N channel anchors based only on measurement of an uplink reference signal (for example, an SRS) and according to some criteria (for example, channel similarity and capacity maximization). In this implementation, the first apparatus does not need to measure or report the P channel anchors, and the second apparatus directly sends a selection result (namely, the N channel anchors) to the first apparatus, to complete an anchor agreement between the first apparatus and the second apparatus.

S303: The second apparatus sends first indication information, where the first indication information indicates the N channel anchors; and correspondingly, the first apparatus receives the first indication information.

For related descriptions of the first indication information, refer to the corresponding descriptions in the second part. Details are not described herein again. For example, the second apparatus sends the first indication information to the first apparatus, to complete an anchor agreement between the first apparatus and the second apparatus. That is, the two apparatuses use the same N channel anchors.

S304: The second apparatus sends second indication information, where the second indication information indicates incremental information associated with the N channel anchors; and correspondingly, the first apparatus receives the second indication information.

For example, the second apparatus dynamically delivers, based on the agreed N channel anchors, incremental information used to generate uplink precoding. In Example 2, it is assumed that the incremental information is incremental information of the channel anchor. For example, the incremental information of the channel anchor may include one piece or a combination of a plurality of pieces of incremental information of the channel state information and incremental information of the precoding information. For explanations of the incremental information of the channel state information and the incremental information of the precoding information, refer to the corresponding descriptions in Example 1 above. Details are not described herein again.

S305: The first apparatus performs uplink precoding based on the N pieces of anchor information and the incremental information, to obtain and send an uplink signal.

For example, the first apparatus determines, based on the N pieces of anchor information of the agreed N channel anchors and the incremental information dynamically delivered by the second apparatus, the precoding information used for sending the uplink data signal, to complete sending of the uplink data signal.

Optionally, if the anchor information is the channel state information, the first apparatus may determine, based on channel state information corresponding to the channel anchor and the dynamically delivered incremental information of the channel state information, channel state information corresponding to current data transmission, and generate, based on the channel state information corresponding to current data transmission, the uplink precoding information for current data transmission, to complete sending of the uplink data signal.

Optionally, if the anchor information is the precoding information or a combination of the channel state information and the precoding information, the first apparatus may determine, based on precoding information corresponding to the channel anchor and the dynamically delivered incremental information of the precoding information, the uplink precoding information for current data transmission, to complete sending of the uplink data signal.

In Example 2, the channel anchor is introduced, and the second apparatus needs to dynamically send only a part of uplink precoding information (for example, incremental information based on the channel anchor) based on the channel anchor. This helps reduce signaling overheads of uplink precoding, and reduce complexity of uplink precoding calculation.

Example 3: A corresponding time domain anchor mode is enabled based on a time domain anchor.

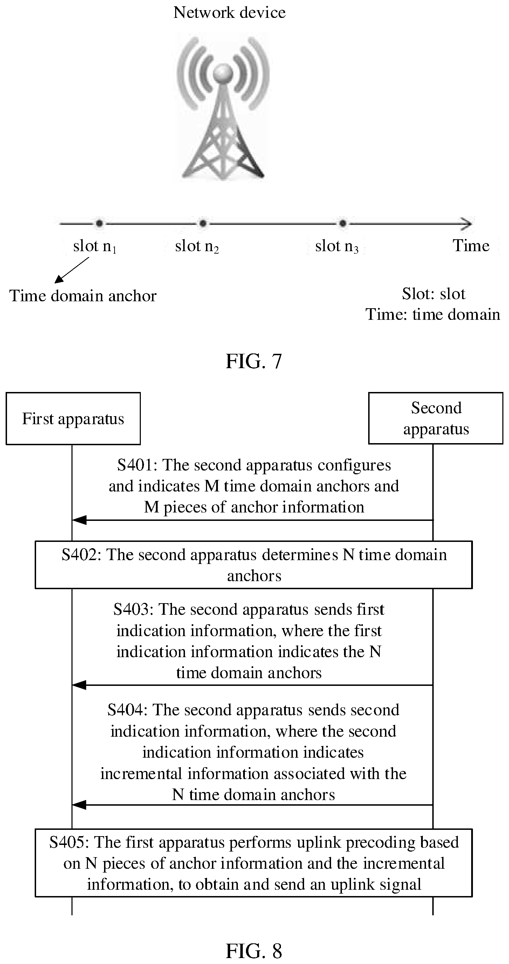

For example, FIG. 7 is a diagram of a time domain anchor according to this application. In FIG. 7, a slot (slot) is used as an example for description. It is assumed that a time domain resource of a network device is divided into a plurality of slots (for example, a slot *n*₁ to a slot *n*₃ in FIG. 7), and each slot is a time domain anchor. Optionally, the time domain anchor may be indicated by an index (for example, a frame index, a subframe index, a slot index, or a symbol index) of a time domain position. This is not limited in this application.

For example, FIG. 8 is a schematic flowchart of a communication method applied to a network scenario including a time domain anchor according to this application. A specific procedure is implemented through interaction between a first apparatus and a second apparatus, and includes the following steps.

S401: The second apparatus configures and indicates M time domain anchors and M pieces of anchor information.

For example, the second apparatus determines M frames/subframes/slots/symbols as the M time domain anchors, and sends the M pieces of anchor information of the M time domain anchors to the first apparatus, to enable a corresponding time domain anchor mode.

In a possible implementation, anchor information of the time domain anchor may be a combination of time domain information and channel state information, and the time domain information is associated with the channel state information. The time domain information may be associated with the index (for example, the frame index, the subframe index, the slot index, or the symbol index) of the time domain position. The channel state information may be a value of a channel state itself, or may be an index of a predefined channel state list, or may be a part or all of parameters of a channel state. For example, the channel state information may be beam information of a channel, delay domain information of a channel, a Q matrix obtained after orthogonal triangular QR decomposition is performed on a matrix related to a channel state, or the like. The M pieces of anchor information include a combination of the foregoing information. For example, for a time domain anchor 1, anchor information 1 of the time domain anchor 1 includes information such as a slot index of the time domain anchor 1, beam information of a channel state 1 associated with the time domain anchor 1, delay domain information of the channel state 1, and a Q matrix obtained after QR decomposition is performed on a channel matrix of the channel state 1.

In another possible implementation, the anchor information of the time domain anchor may be a combination of the time domain information and precoding information. For a description of the time domain information, refer to the foregoing description. The precoding information is determined based on channel state information associated with a time domain. For example, the precoding information may be a value of a precoding matrix itself, or may be an index of a predefined precoding matrix list, or may be a part or all of parameters in a precoding matrix generation process. The M pieces of anchor information include a combination of the foregoing information. For example, for a time domain anchor 2, anchor information 2 of the time domain anchor 2 includes information such as a slot index of the time domain anchor 2, channel state information 2 associated with the time domain anchor 2, and a precoding matrix determined based on the channel state information 2.

S402: The second apparatus determines N time domain anchors.

In a possible implementation, the second apparatus receives fourth indication information from the first apparatus, where the fourth indication information indicates P anchors. The second apparatus determines the N anchors based on the P anchors, where the N anchors are partially or completely the same as the P anchors. In this implementation, the first apparatus determines the P anchors. The P anchors may be the N anchors finally used, or may include the N anchors finally used. For example, if determining, based on a detection result, that locations of the first apparatus at P moments are basically static or surrounding channel environments change slightly, the first apparatus determines to use the P moments as time domain anchors. The first apparatus indicates the P time domain anchors to the second apparatus. Optionally, if a value of P is greater than 1 (that is, the first apparatus selects at least two time domain anchors), the first apparatus may further send weight coefficients corresponding to the at least two time domain anchors to the first apparatus. The weight coefficients indicate weights of different time domain anchors when the N time domain anchors are subsequently selected. For example, the fourth indication information sent by the first apparatus further includes weight coefficients respectively corresponding to the P time domain anchors, or the first apparatus independently sends fifth indication information, where the fifth indication information indicates the weight coefficients respectively corresponding to the P time domain anchors.

In another possible implementation, the second apparatus determines the N time domain anchors through measurement and transmission performance statistics collection and with reference to the P time domain anchors sent by the first apparatus and optional weight coefficients. For example, if the second apparatus determines, through measurement and transmission performance statistics collection, that channel states associated with the P time domain anchors selected by the first apparatus are stable, the second apparatus determines to use the P time domain anchors and anchor information (namely, P=N). Alternatively, if the second apparatus determines that channel states associated with the N time domain anchors in the P time domain anchors selected by the first apparatus are stable, the second apparatus determines to use the N time domain anchors and anchor information (namely, P>N).

S403: The second apparatus sends first indication information, where the first indication information indicates the N time domain anchors; and correspondingly, the first apparatus receives the first indication information.

For related descriptions of the first indication information, refer to the corresponding descriptions in the second part. Details are not described herein again. For example, the second apparatus sends the first indication information to the first apparatus, to complete an anchor agreement between the first apparatus and the second apparatus. That is, the two apparatuses use the same N time domain anchors.

S404: The second apparatus sends second indication information, where the second indication information indicates incremental information associated with the N time domain anchors; and correspondingly, the first apparatus receives the second indication information.

For example, the second apparatus dynamically delivers, based on the agreed N time domain anchors, incremental information used to generate uplink precoding. In Example 3, it is assumed that the incremental information is incremental information of the time domain anchor. For example, the incremental information of the time domain anchor may include one piece or a combination of a plurality of pieces of incremental information of the time domain information, incremental information of the channel state information, and incremental information of the precoding information. The incremental information of the time domain information may be change values of the frame index, the subframe index, the slot index, and the symbol index. For explanations of the incremental information of the channel state information and the incremental information of the precoding information, refer to the corresponding descriptions in Example 1 above. Details are not described herein again.

S405: The first apparatus performs uplink precoding based on the N pieces of anchor information and the incremental information, to obtain and send an uplink signal.

For example, the second apparatus determines, based on the N pieces of anchor information of the agreed N time domain anchors and the incremental information dynamically delivered by the second apparatus, the precoding information used for sending the uplink data signal, to complete sending of the uplink data signal.

Optionally, if the anchor information is the combination of the time domain information and the channel state information, the first apparatus may determine target time domain information based on the time domain information in the anchor information and the dynamically delivered incremental information of the time domain information, determine, based on the target time domain information, channel state information corresponding to current data transmission, and then determine, based on the channel state information corresponding to current data transmission, the uplink precoding information for current data transmission, to complete sending of the uplink data signal. For another example, the first apparatus may determine, based on the channel state information in the anchor information and the dynamically delivered incremental information of the channel state information, channel state information corresponding to current data transmission, and generate, based on the channel state information corresponding to current data transmission, the uplink precoding information for current data transmission, to complete sending of the uplink data signal.

Optionally, if the anchor information is the combination of the time domain information and the precoding information, the first apparatus may obtain target time domain information based on the time domain information in the anchor information and the dynamically delivered incremental information of the time domain information, and determine, based on the target time domain information, the uplink precoding information for current data transmission. Optionally, the first apparatus may alternatively obtain, based on the precoding information in the anchor information and the dynamically delivered precoding incremental information, the uplink precoding information for current data transmission, to complete sending of the uplink data signal.

In Example 3, the time domain anchor is introduced, and the second apparatus needs to dynamically send only a part of uplink precoding information (for example, incremental information based on the time domain anchor) based on the time domain anchor. This helps reduce signaling overheads of uplink precoding, and reduce complexity of uplink precoding calculation.

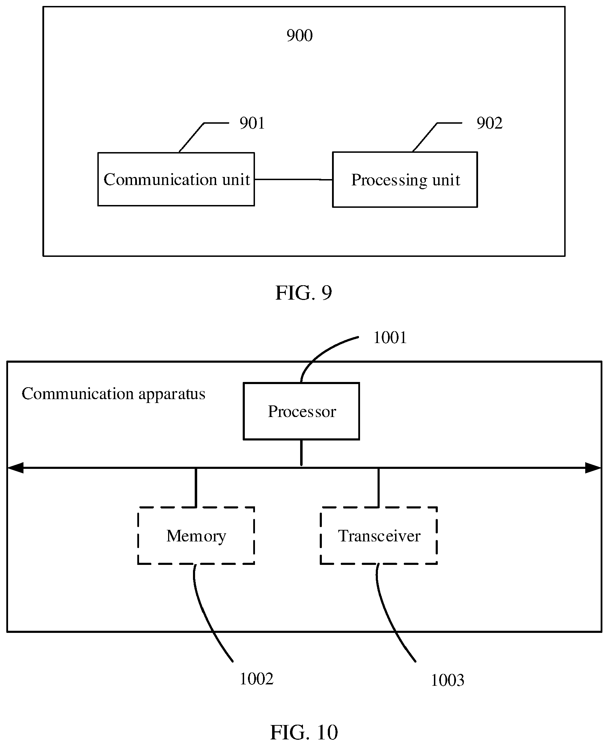

FIG. 9 is a diagram of a communication apparatus according to this application. The apparatus may include a one-to-one corresponding module for performing the methods/operations/steps/actions described in any embodiment shown in FIG. 2 to FIG. 8. The module may be implemented by a hardware circuit, software, or a combination of a hardware circuit and software.

The apparatus 900 includes a communication unit 901 and a processing unit 902, configured to implement the method performed by each device in the foregoing embodiments. The communication unit 901 is also referred to as a transceiver unit. The transceiver unit includes a sending unit and a receiving unit. The sending unit is configured to send a signal, and the receiving unit is configured to receive a signal.

In a possible implementation, the apparatus is a terminal or an apparatus of a terminal. Specifically, the communication unit 901 is configured to receive first indication information, where the first indication information indicates N anchors, the N anchors are associated with N pieces of anchor information, and N is a positive integer. The communication unit 901 is further configured to receive second indication information, where the second indication information indicates incremental information associated with the N anchors, and the N pieces of anchor information and the incremental information are associated with uplink precoding information.

Optionally, the processing unit 902 is configured to perform uplink precoding based on the N pieces of anchor information and the incremental information, to obtain and send an uplink signal.

For specific execution procedures of the communication unit 901 and the processing unit 902 in this implementation, refer to the descriptions of the steps performed by the first apparatus in the foregoing method embodiments and the related descriptions. Details are not described herein again. In the communication method implemented by the apparatus, the first apparatus may first receive the first indication information indicating the N anchors, to obtain the N pieces of anchor information. For example, the N pieces of anchor information include all or a part of the uplink precoding information. The first apparatus may further receive the incremental information associated with the N anchors. For example, the incremental information associated with the N anchors includes the other part of information that is in the uplink precoding information and that is different from the N pieces of anchor information, or information that needs to be updated in all information. This helps reduce indication overheads of the uplink precoding information.

In a possible implementation, the apparatus is a network device or an apparatus of a network device. Specifically, the communication unit 901 is configured to send first indication information, where the first indication information indicates N anchors, the N anchors are associated with N pieces of anchor information, and N is a positive integer. The communication unit 901 is further configured to send second indication information, where the second indication information indicates incremental information associated with the N anchors, and the N pieces of anchor information and the incremental information are associated with uplink precoding information.

Optionally, the processing unit 902 is configured to process information sent or received by the communication unit 901. For example, before the communication unit 901 sends the first indication information, the processing unit 902 is configured to determine the N anchors.

For specific execution procedures of the communication unit 901 and the processing unit 902 in this implementation, refer to the descriptions of the steps performed by the second apparatus in the foregoing method embodiments and the related descriptions. Details are not described herein again. In the communication method implemented by the apparatus, the second apparatus may first send the first indication information indicating the N anchors, to indicate the N pieces of anchor information to the first apparatus. For example, the N pieces of anchor information include all or a part of the uplink precoding information. The second apparatus may further send the incremental information associated with the N anchors. The incremental information associated with the anchor is an increment of anchor information, or the other part of precoding generation information. This helps reduce indication overheads of the uplink precoding information.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 10 is a diagram of another structure of a communication apparatus according to an embodiment of this application. The communication apparatus may be configured to perform the steps performed by the first apparatus or the second apparatus in the foregoing method embodiments. For details, refer to the related descriptions in the foregoing method embodiments.

The communication apparatus includes a processor 1001. Optionally, the communication apparatus further includes a memory 1002 and a transceiver 1003.

In a possible implementation, the processor 1001, the memory 1002, and the transceiver 1003 are separately connected through a bus, and the memory stores computer instructions.

Optionally, the processing unit 902 in the foregoing embodiment may be specifically the processor 1001 in this embodiment. Therefore, specific implementation of the processor 1001 is not described again. The communication unit 901 in the foregoing embodiment may be specifically the transceiver 1003 in this embodiment. Therefore, specific implementation of the transceiver 1003 is not described again.

In this application, the processor may be a general-purpose processor, a digital signal processor, an application-specific integrated circuit, a field-programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

This application provides another communication apparatus. The device includes a processor and an interface. Optionally, a memory is further included. The processor is coupled to the memory. The processor is configured to read and execute computer instructions stored in the memory, to implement the communication method in embodiments shown in FIG. 2 to FIG. 8.

An embodiment of this application further provides a communication system. The communication system includes a first apparatus and a second apparatus. The first apparatus is configured to perform all or a part of the steps performed by the first apparatus in the foregoing embodiments. The second apparatus is configured to perform all or a part of the steps performed by the second apparatus in the foregoing embodiments.

This application provides a computer-readable storage medium. The computer-readable storage medium stores a program or instructions. When the program or the instructions are run on a computer, the computer is enabled to perform the communication method in the embodiments described in FIG. 2 to FIG. 8.

This application provides a computer program product. The computer program product includes instructions. When the instructions are run on a computer, the computer is enabled to perform the communication method in the embodiments described in FIG. 2 to FIG. 8.

This application provides a chip or a chip system. The chip or the chip system includes at least one processor and an interface. The interface and the at least one processor are interconnected through a line. The at least one processor is configured to run a computer program or instructions, to perform the communication method in the embodiments described in FIG. 2 to FIG. 8.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or a part of the technical solutions provided in this application may be implemented by using software, hardware, firmware, or any combination thereof. When software is used for implementation, all or a part of the technical solutions may be implemented in a form of a computer program product. The computer program product includes one or more computer instructions. When the computer program instructions are loaded and executed on a computer, the procedures or functions according to this application are completely or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A communication method, wherein the method comprises:
receiving first indication information, wherein the first indication information indicates N anchors, the N anchors are associated with N pieces of anchor information, and N is a positive integer; and
receiving second indication information, wherein the second indication information indicates incremental information associated with the N anchors, and the N pieces of anchor information and the incremental information are associated with uplink precoding information.

2. The method according to claim 1, wherein the method further comprises:
performing uplink precoding based on the N pieces of anchor information and the incremental information, to obtain and send an uplink signal.

3. The method according to claim 1, wherein before receiving the first indication information, the method further comprises:
receiving third indication information, wherein the third indication information indicates M pieces of anchor information of M anchors, the anchor is at least one of a geographic anchor, a channel anchor, and a time domain anchor, M is a positive integer greater than or equal to N, and the N anchors belong to the M anchors.

4. The method according to claim 3, wherein when the anchor is a geographic anchor, anchor information of the geographic anchor comprises one piece or a combination of a plurality of pieces of information such as geographic location information, channel state information, and precoding information; or
when the anchor is a channel anchor, anchor information of the channel anchor comprises one piece or a combination of a plurality of pieces of information such as channel state information and precoding information obtained based on the channel state information; or
when the anchor is a time domain anchor, anchor information of the time domain anchor comprises one piece or a combination of a plurality of pieces of information such as time domain information, channel state information, and precoding information.

5. The method according to claim 3 or 4, wherein the geographic anchor represents a geographic location, the channel anchor represents a preset channel state, and the time domain anchor represents a time domain position.

6. The method according to any one of claims 1 to 5, wherein the second indication information comprises at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

7. The method according to any one of claims 1 to 6, wherein before receiving the first indication information, the method further comprises:
sending fourth indication information, wherein the fourth indication information indicates P anchors, and the N anchors are partially or completely the same as the P anchors.

8. A communication method, wherein the method comprises:
sending first indication information, wherein the first indication information indicates N anchors, the N anchors are associated with N pieces of anchor information, and N is a positive integer; and
sending second indication information, wherein the second indication information indicates incremental information associated with the N anchors, and the N pieces of anchor information and the incremental information are associated with uplink precoding information.

9. The method according to claim 8, wherein before sending the first indication information, the method further comprises:
sending third indication information, wherein the third indication information indicates M pieces of anchor information of M anchors, the anchor is at least one of a geographic anchor, a channel anchor, and a time domain anchor, M is a positive integer greater than or equal to N, and the N anchors belong to the M anchors.

10. The method according to claim 9, wherein when the anchor is a geographic anchor, anchor information of the geographic anchor comprises one piece or a combination of a plurality of pieces of information such as geographic location information, channel state information, and precoding information; or
when the anchor is a channel anchor, anchor information of the channel anchor comprises one piece or a combination of a plurality of pieces of information such as channel state information and precoding information obtained based on the channel state information; or
when the anchor is a time domain anchor, anchor information of the time domain anchor comprises one piece or a combination of a plurality of pieces of information such as time domain information, channel state information, and precoding information.

11. The method according to claim 9 or 10, wherein the geographic anchor represents a geographic location, the channel anchor represents a preset channel state, and the time domain anchor represents a time domain position.

12. The method according to any one of claims 8 to 11, wherein the second indication information comprises at least one of the following: incremental information of geographic location information corresponding to the N anchors, incremental information of channel state information corresponding to the N anchors, incremental information of precoding information corresponding to the N anchors, and incremental information of time domain information corresponding to the N anchors.

13. The method according to any one of claims 8 to 12, wherein before sending the first indication information, the method further comprises:
receiving fourth indication information, wherein the fourth indication information indicates P anchors, and the N anchors are partially or completely the same as the P anchors.

14. A communication apparatus, comprising a communication unit and a processing unit, wherein the communication unit and the processing unit are configured to perform the method according to any one of claims 1 to 7 or claims 8 to 13.

15. A communication apparatus, comprising a processor, wherein the processor is configured to enable, through a logic circuit and/or by executing instructions, the communication apparatus to perform the method according to any one of claims 1 to 7 or claims 8 to 13.

16. The apparatus according to claim 15, further comprising a memory, wherein the memory is configured to store the instructions.

17. A computer-readable storage medium, wherein the computer-readable storage medium stores instructions; and when the instructions are run on a computer, the computer is enabled to perform the method according to any one of claims 1 to 7 or claims 8 to 13.

18. A chip system, wherein the chip system comprises a processor and an interface, and the processor is configured to execute a computer program, to enable the chip system to implement the method according to any one of claims 1 to 7 or claims 8 to 13.

19. A computer program product, comprising instructions, wherein when the instructions are run on a computer, the computer is enabled to perform the method according to any one of claims 1 to 7 or claims 8 to 13.

20. A communication system, comprising at least one of the following apparatuses: an apparatus configured to perform the method according to any one of claims 1 to 7, and an apparatus configured to perform the method according to any one of claims 8 to 13.
